# EUROPÄISCHE PATENTSCHRIFT

(11) **EP 1 213 118 B1**
(45) Veröffentlichungstag und Bekanntmachung des Hinweises auf die Patenterteilung: **14.02.2007**
(21) Anmeldenummer: 01128730.7
(22) Anmeldetag: 03.12.2001
(51) Int. Cl.: B29C 44/06, B29C 44/00, E04B 1/80

(54) **Kunststoffschaumplatten grosser Dicke**
Thick plastic foam panels
Panneaux en mousse d'épaisseur élévée

(30) Priorität: 09.02.2001 DE 10106341; 08.12.2000 DE 10061465
(43) Veröffentlichungstag der Anmeldung: 12.06.2002
(73) Patentinhaber: Jackon Insulation GmbH, 29416 Mechau (DE)
(72) Erfinder: Willetal, Jürgen, 29452 Wustrow (DE); Schulze, Ulfried, 29416 Klein Gartz (DE); Plate, Mark, 29410 Salzwedel (DE); Hallmann, Uwe, 29482 Küsten (DE)
(74) Vertreter: Kaewert, Klaus

(56) Entgegenhaltungen:
- DE-A- 2 317 612
- DE-C- 840 786
- US-A- 3 594 251

## Beschreibung

Die Erfindung betrifft eine extrudierte Kunststoffschaumplatte großer Dicke. Neue Energiesparverordnungen verlangen vom Bauherrn immer bessere Wärmedämmungen. Aufgrund der begrenzten Verfügbarkeit der nicht erneuerbaren Energieträger (Kohle, Gas, Erdöl) sind alle Verbraucher angewiesen, Energie zu sparen. Dies kann im starken Maße durch eine bessere Hausisolierung geschehen. Vor dem Hintergrund sind in der Vergangenheit Kunststoffschaumplatten mit einer Dicke von mehr als 100 mm, sogar mit einer Dicke von 200mm und mehr entstanden. Das ist mit den HFCKW-haltigen Treibmitteln für Extruderschaumplatten ohne weiteres möglich. Die HFCKW-haltigen Treibmittel werden jedoch wegen ihrer schädigenden Wirkung auf die Ozonschicht durch alternative Treibmittel ersetzt.
Mit dem Einsatz von alternativen Treibmitteln haben sich bei der Herstellung dieser Kunststoffschaumplantten erhebliche Schwierigkeiten ergeben. Ab einer Dicke von 60/70 mm nehmen diese Schwierigkeiten stark zu.
Außerdem verschlechtern sich die Isoliereigenschaften mit dem Einsatz der meisten alternativen Treibmittel beim Extrudieren von Dämmplatten (XPS).
Die Isoliereigenschaft des XPS hängt sehr stark von der Zellstruktur des Schaums ab. Diese wird auch bestimmt durch das Verhältnis von Dämmstoffdicke zu Düsenspalt. Zugleich muß durch Verengung des Düsenspaltes ein notwendiger Schmelzedruck vor dem Düsenspalt aufgebaut werden. Das zwingt zur Einhaltung bestimmter Düsenspaltgrenzen. Das heißt, der Düsenspalt kann nicht beliebig weit geöffnet werden, da mit seiner Hilfe der Druck in der Düse erzeugt wird, durch den gewährleistet wird, daß das Treibmittel nicht bereits in der Düse zum Aufschäumen der Schmelze führt.
Bei größer werdender Plattendicke ergibt sich dadurch eine Vergrößerung des Verhältnisses von Dämmstoffdicke zu Düsenspalt. Je größer dieses Verhältnis wird, um so schlechter wird die Zellstruktur und umso schwieriger ist die Herstellung eines Schaumes mit guten Isolierengenschaften.

In der Vergangenheit ist mit der DE 4421016 A1 vorgeschlagen worden, die oben erläuterten Schwierigkeiten durch Herstellung von Platten mit sicher erreichbarer Dicke und Doppelung der Platten zu überwinden. Dabei war eine thermische Verbindung zwischen den Platten vorgesehen. Eine Bearbeitung der Platten an den Berührungsflächen war nicht vorgesehen. Dieser Vorschlag wurde aber nicht umgesetzt, da beim Verschweißen von zwei Platten an der Schweißnaht eine Sperrschicht gegen Wasserdampfdiffusion entsteht und diese für die meisten Anwendungen des XPS als Wärmedämmstoff im Bauwesen erhalten bleiben muß. Die Sperrschicht wird durch die Extrusionshäute an den Berührungsflächen der Platten und die aus der thermischen Verbindung entstehende zusätzliche Verhautung gebildet.

Ein Vorschlag zum Verschweißen von Platten findet sich auch in DE3541053 A1. Dort sind zwar auch zusammengeschweißte Platten dargestellt. Zum Verschweißen dienen Heizkeile, die zwischen den zu verschweißenden Platten angeordnet sind. Wie bei der zuvor erläuterten Schweißtechnik bildet sich mit der einheitlichen Schweißung eine Sperrschicht.
Außerdem ist die Handhabung der Schweißvorrichtung an eine extreme Nachgiebigkeit der zu verbindenden Schaumplatten gebunden. Eine solche Nachgiebigkeit ist bei üblichen XPS-Schaumplatten für die Wärmedämmung nicht gegeben.

Es ist auch bekannt, extrudierte Platten miteinander zu verkleben. Dabei besteht gleichfalls eine Sperrschicht zwischen den miteinander verbundenen Platten. Die Sperrschicht besteht wiederum aus den Extrusionshäuten, zusätzlich aus der Kleberschicht.

Die DE 2317612 A betrifft einen teilflächigen Leimauftrag beim Verleimen von Platten. Außerdem ist eine Verbindung von Polystyrolschaum mit Gipskartonplatten, nicht eine Verbindung zwischen zwei Polystyrolschaumptatten vorgesehen. Dadurch ergeben sich andere Probleme.

Die DE 830786 C betrifft die teilflächige Verleimung von Aluminiumfolien mit Kunststoffschaum, gleichfalls keine Verbindung zwischen zwei Polystyrolschaumplatten.

Die US 3594251 A zeigt zwar auch die Verbindung von Schaumschichten mit einem Kleber. Bei den Schaumschichten handelt es sich aber um Latex. Die Besonderheit von Latex bzw. der Herstellung von Latex liegt in der Herstellung. Latex wird nicht extrudiert.

Außerdem ist der dort beschriebene Kleber nicht für Polystyrolschaumplatten geeignet.

Seit Jahren bemüht sich die Fachwelt um eine ausreichende Produktqualität von XPS-Platten. Auch die Erfindung hat sich diese Aufgabe gestellt. Dabei wendet sich die Erfindung der nicht aufgenommenen Technik der Doppelung zu. Dem liegt die Erkenntnis zugrunde, daß die bisherigen Negativ-Erfahrungen durch die Sperrschicht zwischen den miteinander verbundenen Platten begründet sind.

Nach der Erfindung wird eine Diffusionsfähigkeit zwischen mindestens zwei verbundenen Platten hergestellt, indem
a) extrudierte Ausgangsplatten verwendet werden, die spätestens unmittelbar vor der Verbindung an der Berührungsfläche durch Bearbeitung von der Extrusionshaut befreit werden und
b) entweder eine Klebung mit einem diffusionsoffenen Kleber erfolgt
c) oder nur eine teilflächige Verbindung zwischen den Platten erfolgt.

Von Vorteil sind dabei völlig plane Berührungsflächen der zu verbindenden Platten. Dazu erfolgt entweder eine Bearbeitung der Ausgangsplatten
d) an den Berührungsflächen und den gegenüberliegenden Flächen oder
e) einseitig an den Berührungsflächen und durch zusätzliche Maßnahmen, welche die sich ergebende Plattenkrümmung verhindern oder kompensieren.

Das Herstellen einer planen Oberflläche vor dem Verbinden der Platten verhindert, daß an der Verbindungsstelle Hohlrläume oder Kanäle entstehen, in die Wasser eindringen kann. Das Wasser würde die Isoliereigenschaften des Dämmstoffes herabsetzen.
Wenn eine gleichmäßige Bearbeitung an beiden gegenüberliegenden Flächen der Ausgangsplatten erfolgt, wird eine Plattenkrümmung verhindert.
Die Plattenkrümmung kann bei nur einseitiger Bearbeitung der Ausgangsplatten auch durch Wärmebehandlung der nicht bearbeiteten, gegenüberliegenden Fläche ausgeglichen werden. Denkbar ist auch eine Verbindung der Ausgangsplatten mit ausreichendem Druck, der eine Krümmung aufhebt. Nach der Verbindung halten sich die einseitig bearbeiteten Ausgangsplatten insbesondere bei gleicher Dicke gegenseitig in der gewünschten ebenen Form.

Eine Plattenkrümmung läßt sich auch verhindern, indem zwei extrudierte Schaumstränge einseitig an den Berührungsflächen im erfindungsgemäßen Sinne oberflächenbearbeitet werden und anschließend, vorzugsweise sofort miteinander verbunden werden. Aufgrund ihrer Länge legen sich die Schaumstränge leicht aneinander an und kann ein ebener Verlauf der Stränge gewahrt werden.
Nach ihrer erfindungsgemäßen Verbindung werden die Schaumstränge zu den gewünschten Platten abgelängt.

Durch die Oberflächen-Bearbeitung werden je nach Qualität der Ausgangsplatten 1 bis 10 nun der Plattendicke entfernt.

Als Bearbeitung eignet sich zum Beispiel ein Schneiden durch Fräsen, Hobeln, Schneiden oder Sägen.

Der diffusionsoffene Kleber soll die Diffusionusfähigkeit der Platte nicht mehr als um 50% herabsetzen, vorzugsweise nicht mehr als 20% verändert. Noch weiter bevorzugt wird ein Kleber verwendet, der die Diffusionsfähigkeit der Platte gar nicht beeinträchtigt. Die Diffusionsfahigkcit der Platten läßt sich leicht messen. Danach kann der Kleber aus den am Markt verfügbaren Klebern ausgewählt werden.

Die Verwendung diffusionsoffener Kleber ist zwar an sich bekannt. So verweist zum Beispiel die DE 6891 1643 T2 auf diffusionsdurchlässige und eine unterbrochene Klebeschicht zwischen Textilen und zwischen Autositzen. Auf die Lösung des Problemes dicker, kohlendioxidgetriebener Platten ist daraus jedoch kein Hinweis zu entnehmen.

Bei teilflächiger Verbindung der Ausgangsplatten ist die Diffusionsfähigkeit des Verbindungsmaterials nicht ausschlaggebend.
Es kann mit nicht diffusionsfähigem Kleber gearbeitet werden.
Es kann auch stellenweise geschweißt werden.

Die einzelnen Verbindungsstellen sollen möglichst gleichmäßig über der Gesamtfläche verteilt sein und klein sein, so daß die ausdiffundierenden bzw. durchdiffundierenden Gase möglichst geringe Wege vorbei an den nicht diffusionsfähigen Verbindungsstellen zurücklegen müssen.

In dem Sinne sollen die Verbindungsstellen bei punktweiser oder fleckenweiser Ausbildung einzeln eine Ausdehnung besitzen, die vorzugsweise nicht größer als 25 Quadratzentimeter, vorzugsweise nicht größer als 2,5 Quadratzentimeter und noch weiter bevorzugt nicht größer als 0,25 Quadratzentimeter besitzen.
Bei streifenförmigen Verbindungsstellen werden die Streifen so gestaltet, daß sie in Ihrer Fläche und Ihrem Abstand die gleichen Verhältnisse wie die punktweisen bzw. fleckenweisen Verbindungsstellen wiedergeben.

Von der gesamten Berührungsfläche zwischen den zu verbindenden Ausgangsplatten soll höchstens 80%, vorzugsweise höchstens 50% und noch weiter bevorzugt höchstens 20% durch Schweißflächen oder Klebeflächen verschlossen sein.

Wahlweise können auch nicht oder schlecht diffusionsfähige Reaktionskleber bzw. Hot-MeltKleber, die sofort haften, und hoch diffusionsfähige Kleber kombiniert werden, die erst mit der Zeit eine Klebekraft entwickeln. Die Kombination erfolgt dann vorzugsweise durch Auftrag der verschiedenen Kleber an unterschiedlichen Klebeflächen.
Mit der Kombination kann eine sehr schnelle Verbindung der Ausgangsplatten erreicht werden.
Eine schnelle Verbindung ist von Vorteil, wenn z.B. zwei Ausgangsplatten parallel zueinander und übereinander extrudiert werden, um sie nach einseitiger Oberflächenbearbeitung als Endlos-Stränge miteinander zu verbinden.

Zum Auftragen von Kleber eignen sich Klebewalzen oder Düsen, aus denen der Kleber gesprüht wird. Mit den Walzen läßt sich jede gewünschte Verteilung (sowohl hinsichtlich der flächenmäßigen Ausdehnung als auch hinsichtlich der Dicke des Auftrages) des Klebers auf die Berührungsflächen herbeiführen. Der Kleberauftrag kann dabei wie ein Farbauftrag gehandhabt werden. In dem Sinne sind anstelle der Walzen auch Auftragsplatten nach dem Vorbild von Druckplatten geeignet.
Düsen sind als Klebewerkzeug besonders für Hot-Meltkleber geeignet. In der beheizten Düse ist der Kleber bei entsprechender Erwärmung so dünnflüssig, daß er als Flüssigkeit aufgesprüht werden kann. Der Kleber kann dabei in der Form von Tröpfchen oder als Strahl gesprüht werden. Zur Erreichung eines teilflächigen Kleberauftrages können die Kleberstrahlen in Abständen voneinander und die Tröpfchen in entsprechender Streuung aufgetragen werden.

Für den Auftrag eines diffusionsoffenen Klebers ist gleichfalls ein tropfenförmiger oder streifenförmiger Auftrag geeignet. Es kann auch ein Aufstrich mittels Quast oder dergleichen erfolgen.

Alternativ oder zusätzlich ist eine weitere Methode zur Bewirkung ausreichender Wasserdampfdiffusion vorgesehen. Diese Variante setzt auf eine mechanische Verbindung der Platten. Die aneinanderliegenden bzw. sich berührenden Platten werden durch mechanische Verbindung aneinander gehalten. Die Verbindung kann durch den oben beschriebenen teilweisen Kleberauftrag und/oder durch diffusionsoffenen Kleber an den Berührungsflächen unterstützt werden. Wahlweise kann auch eine mechanische Verbindung ohne Kleber an den Berührungsflächen bewirkt werden. In der zuletzt beschriebenen Situation kann die Diffusion nicht durch Kleber behindert werden.

Die mechanische Verbindung wird durch Verbindungselemente bewirkt, die an den Plattenseiten in die Platten greifen und/oder die Platten umgreifen. Diese Verbindung kann punktförmig und/oder linienförmig und/oder flächenweise erfolgen. Die Befestigungsmöglichen mit Verbindungselementen können den Verbindungslylöglicbkeiten mit dem Kleber nachgebildet werden und umgekehrt.

Die Befestigungspunkte haben eine der flächigen Ausdehnung der Befestigungselemente entsprechende Ausdehnung. Die Bezeichnung als Punkte entspricht der Fachsprache, obwohl es sich um Flächen handelt.
Vorzugsweise sind die Befestigungspunkte gleichmäßig über der Berührungsfläche verteilt. Wahlweise verteilen sich die Befestigungspunkte auch entsprechend der Verteilung der Zugkräfte in den Platten. Die erwarteten Zugkräfte resultieren aus der Belastung der Platten und/oder aus den belastungsunabhängigen Plattenverformungen.

Die Befestigungslinien haben eine der flächigen Ausdehnung der Befestigungselemente entsprechende Ausdehnung. Die Bezeichnung als Linien entspricht der Fachsprache, obwohl es sich um Flächen handelt.
Die linienförmige Befestigung kann geradlinig und/oder gekrümmt verlaufen. Vorzugsweise verlaufen die Befestigungslinien geradlinig und quer über die gesamte Berührungsfläche.
Die Befestigungslinien können entsprechend den oben beschriebenen Befestigungspunkte verteilt sein.

Für die Verteilung der Befestigungslinien gilt das gleiche wie für die Verteilung der Befestigungspunkte.

Wahlweise haben die Verbindungselemente die Form von Ankern. Dabei finden sich an den Verbindungselementen verdickte Stellen, die den Verbindungselementen die notwendige Ausreißfestigkeit im Schaum geben.
Die Ausreißfestigkeit kann auch auf andere Weise als durch Verdickung erzielt werden. Z.B. besitzen verschiedene gegensätzlich geneigte Verbindungselemente aufgrund ihrer gegensätzlichen Neigung bereits eine vorteilhafte Ausreißfestigkeit.
Vorzugsweise finden lang gestreckte, auf ihrer Länge unprofilierte Verbindungselemente für die Verbindungsvariante mit gegensätzlicher Neigung Anwendung. Dabei können die Verbindungselemente aus durch Ablängen einfacher Profilstränge oder durch Ausschneiden aus Platten gewonnen werden.
Wahlweise werden die Verbindungselemente außerdem in den Platten verklebt. Das erhöht die Ausreißfestigkeit.
Für die Verbindungselemente werden Ausnehmungen in die Platten eingearbeitet. Die Ausnehmungen werden den Verbindungselemente angepaßt oder umgekehrt.
Günstig ist die Verwendung von Fräsern für die Herstellung von Ausnehmungen. Geeignet sind sowohl Scheibenfräser als auch Fingerfräser und Stirnfräser.

Mit Fräsern kann seitlich in kürzester Zeit eine Ausnehmung hergestellt werden.
Die Fräserbewegung kann CNC-gesteuert oder mittels Schablonen gesteuert sein. Einfache Bewegungen lassen sich auch mit Endschaltern steuern.

Mit dem Fräser lassen sich auch flache Ausnehmungen für Verbindungselemente in den Schaum einarbeiten, in welche die Verbindungselemente seitlich eingelegt werden. Hier kann die Form der Verbindungselemente und der Ausnehmungen noch weiter variieren. Wahlweise werden sogar seitliche Formen mit seitlichen Kurven und/oder Geraden mit solchen Formen zur Plattenmitte hin an den Verbindungselementen kombiniert.

Die verschiedenen Fräser haben in Bezug auf die Platte unterschiedliche Arbeitshaltungen, zum Teil aber auch charakterische Arbeitshaltungen. Der Fingerfräser kann unterschiedlich stehen. Der Scheibenfräser verläuft mit seiner Arbeitsebene/Richtung entsprechend den Ausnehmungen regelmäßig quer zur Plattenlängsrichtung und geneigt zur Plattenebene, gegebenenfalls auch geneigt zur Plattenlängsrichtung Der Stirnfräser steht mit seiner Arbeitsrichtung wie der Scheibenfräser.

Neben der spanabhebenden Bearbeitung durch Fräser besteht die Möglichkeit Nutzen, Ausnehmungen usw. durch CNC gesteuerte Glühdratschneidetechnik herzustellen.

Wahlweise werden die Ausgangsplatten einzeln (vor Aufeinanderlegen) bearbeitet oder werden die Kunststoffschaumplatten mit aufeinander gelegten Ausgangsplatten bearbeitet.

Für die Verbindungselemente ist vorzugsweise der gleiche Kunststoff wie für die Ausgangsplatten vorgesehen, bei XPS-Platten also XPS. Durch unterschiedliche Extrusion können unterschiedliche Raumgewichte anfallen. Vorzugsweise soll das Raumgewicht der Verbindungselemente und der Platten nicht mehr als 20 kg pro Kubikmeter, besser nicht mehr als 5 kg pro Kubikmeter voneinander abweichen.

Die Verbindungselemente werden wahlweise nach seitlicher Bearbeitung der Platten eingesetzt. Dann ist eine ausreichende Maßhaltigkeit vorgesehen. Wahlweise werden die Verbindungselemente nach der Bearbeitung eingesetzt. Dann ist ein Übermaß der Verbindungselemente vorgesehen, so daß die Verbindungselemente von der seitlichen Bearbeitung erfaßt werden.

Die Verbindung ist oben an zwei Ausgangsplatten beschrieben. Nach dem erfindungsgemäßen Verfahren lassen sich aber auch 3 und mehr Platten miteinander verbinden

Das erfindungsgemäße Verbinden hat überraschender Weise noch weitere Vorteile, denn es reduziert sich die Anzahl der zu extrudierenden Dickenformate. Z.B. lassen sich aus 60iger Platten (die Zahl bezeichnet im folgenden die Dicke in mm) eine 120iger Platte oder eine 1 80iger Platte oder eine 240iger Platte herstellen; aus einer 50iger Platte eine 100eter Platte, eine 150iger Platte, eine 200eter Platte oder eine 250iger Platte. In den beschriebenen Fällen ergeben sich aus einem einzigen Dickenformat durch Doppelung/Verbindung bereits drei bzw. vier weitere handelsübliche Dickenformate. Es können auch unterschiedlich dicke Platten miteinander kombiniert werden, z.B. 50iger und 60iger Platen oder 40iger und 50iger Platten, wenn keine Gefahr eine Plattenkrümmung verursacht wird.

Vorzugsweise beschränkt sich in dem Sinne die erfindungsgemäße Herstellung auf die Verwendung 30iger bis 70iger Platten. Noch weiter bevorzugt beschränkt sich die Plattenherstellung auf die Verwendung von 40iger, 50iger und 60iger Ausgangsplatten. Bis zu der 60iger Plattendicke lassen sich zudem noch bessere Lambdawerte zuverlässig erreichen. Dadurch ergibt sich an der erfindungsgemäß hergestellten Platte noch eine weitere Verbesserung.

Vorzugsweise entsteht durch die erfindungsgemäße Verbindung eine neue Platte mit einer Mindestdicke von 70 mm.

Wahlweise werden zur Herstellung von Platten mit Nut und Feder drei Ausgangs-Platten im erfindungsgemäßen Sinne gedoppelt, wobei die mittlere Ausgangs-Platte gegenüber den beiden anderen Ausgangs-Platten(die in liegender Anordnung oben und unten liegen) so versetzt wird, daß sie an zwei Plattenseiten zurückspringt und eine Nut bildet und an den beiden Plattenseiten vorspringt und eine Feder bildet. So hergestellte Platten können schließend verlegt werden, wobei Federn der einen Platte in die Nuten angrenzender anderer Platten greifen.

Wahlweise werden zur Herstellung von Platten mit Stufenfalz zwei Ausgangs-Platten erfindungsgemäß gedoppelt, wobei die eine Ausgangs-Platte gegenüber der anderen Ausgangs-Platte versetzt ist. Das heißt, die eine Ausgangsplatte springt an zwei Seiten zurück und an den verbleibenden anderen Seiten vor. Dadurch können die entstandenen Platten gleichfalls schließend verlegt werden, indem sich die Platte an allen Seiten mit dem Stufenfalz der angrenzenden anderen Platten überlappt.

Bei der Herstellung von Nut und Feder bzw. Herstellung von Stufenfalz mit der erfindungsgemäßen Dopplung ergibt sich zusätzlich eine Einsparung an Schaum, weil die herkömmliche Konfektionierung des Schaumstranges ein Ausfräsen von Nut/Feder und Stufenfalz vorsicht, verbunden mit einem entsprechend hohen Verzehr des Schaumstrangrandes.

Die erfindungsgemäße Verbindung kann auf verschiedene Kunststoffe Anwendung finden. Dazu gehören Polystyrol, Polyethylen, Polypropylen, Ehtylen und Propylencopolymere.

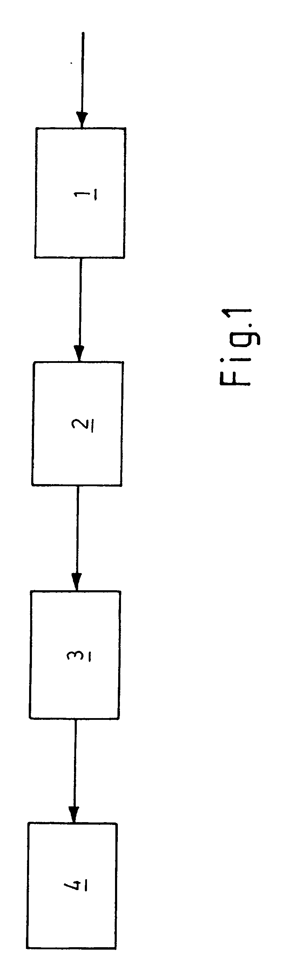

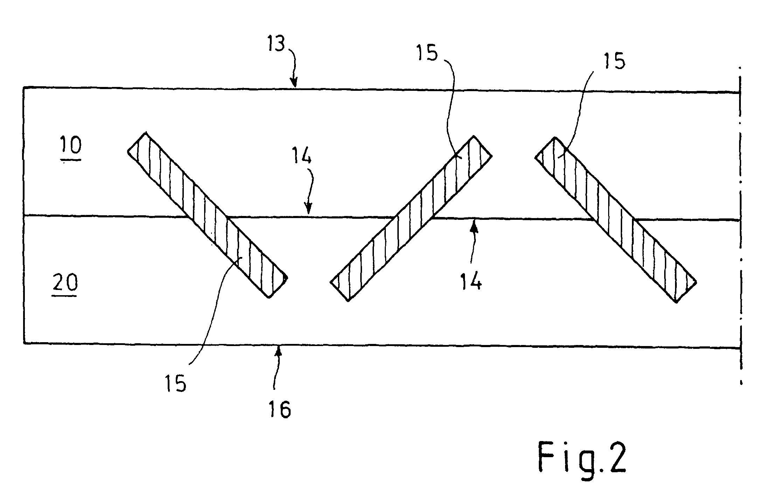

In dem Schema gemäß Fig. 1 und einer Zeichnung nach Fig. 2 sind verschiedene Ausführungsbeispiele der Erfindung beschrieben.

Ausgangsplatten für das Ausführungsbeispiel sind herkömmlich hergestellte Polystyrolschaum-Platten mit einem Raumgewicht von 30 bis 45 kg pro Kubikmeter. Dabei ist im Ausführungsbeispiel zunächst mittels einer Tandem-Extrusionsanlage ein Endlos-Schaumstrang erzeugt worden. Die Tandem-Extrusionsanlage besteht aus einem Primärextruder und einem Sekundärextruder. In dem Primärextruder wird das Kunststoffgranulat mit den üblichen verschiedenen Additiven und Verarbeitungshilfen aufgeschmolzen und zu einer homogenen Schmelze vermischt. Die entstehende Schmelze wird mit Kohlendioxid als Treibmittel versetzt und das Gemisch auf dem weiteren Weg durch den Extruder weiter homogenisiert. Daran schließt sich eine Abkühlung der Schmelze auf Extrusionstemperatur im Sekundärextruder.
Im Sekundärextruder herrscht ein erheblicher Druck. Beim Austragen der Schmelze durch die Düse des Extruders findet eine Entspannung der Schmelze statt. Infolgedessen expandiert das Treibmittel und bildet in der Schmelze entsprechend seiner feinen Verteilung eine Vielzahl gleichmäßig verteilter Blasen/Zellen.

In einem anderen Ausführungsbeispiel wird der anstelle einer Tandemanlage eine Extrusionsanlage mit einem einzigen Extruder eingesetzt. Es kann sich um Extruder verschiedener Bauart handelt, z.B. Einschneckenextruder oder Doppelschneckenextruder.

Die Schmelze wird in einen sogenannten Kalibrator geschäumt. Es handelt sich um Metallplatten, welche dem entstehenden Schaumstrang seine Dicke geben.
Nach ausreichender Abkühlung wird der entstehende Schaumstrang an einer Seite oder an beiden Flachseiten durch Oberflächenbearbeitung von der Extrusionshaut befreit. Das kann inline mit der Schaumherstellung oder nach Ablängen des Schaumstranges zu Platten ohne vorhergehende Oberflächenbearbeitung erfolgen. Es können auch Platten verwendet werden, die in bekannter Weise aus einem Schaumstrang abgelängt werden, der vor dem Ablängen an beiden gegenüberliegenden Flachseiten bearbeitet worden ist. Die bearbeiteten und abgelängten Platten können ohne Zwischenlagerung oder nach vorheriger Lagerung weiterverwendet werden, d.h. in erfindungsgemäßer Weise verbunden werden.

Die Oberflächenbearbeitung erfolgt im Ausführungsbeispiel mittels Fräsen. In anderen Ausführungsbeispielen kann eine andere Oberflächenbearbeitung Anwendung finden.

Die Oberflächenbearbeitung nur einer Flachseite und inline findet vorzugsweise Anwendung, wenn parallel ein gleicher Schaumstrang hergestellt und an der Oberfläche bearbeitet wird, so daß diese Schaumstränge miteinander verbunden werden können.

Im Ausführungsbeispiel werden Platten, die in der oben beschriebenen bekannten Weise bearbeitet und zwischengelagert worden sind, in einer Station 1 nebeneinander und hintereinander auf einen Rollgang (bestehend aus hintereinander angeordneten Rollen) gelegt, so daß sie zwei nebeneinander und aneinanderliegende Plattenstränge bilden. Diese Plattenstränge werden auf dem Rollgang in eine Station 2 geschoben. Dort wird einer der Stränge an der Verbindungsfläche der Ausgangsplatten von oben mit diffusionsoffenem Kleber besprüht. In anderen Ausführungsbeispielen werden beide Stränge mit diffusionsoffenem Kleber besprüht.
Der diffusionsoffene Kleber besitzt nach erfindungsgemäßer Verbindung der Ausgangsplatten eine ausreichende Diffusionsdurchlässigkeit für Wasserdampf.
Bei dem diffusionsoffenen Kleber kann die Plattenoberfläche mit einer mehr oder weniger geschlossenen Kleberschicht überzogen werden.

In einem anderen Ausführungsbeispiel wird unter Verwendung gleicher Einrichtungen und Produkte ein nicht diffusionsoffener Kleber aufgesprüht. Das geschieht mit Tröpfchen von etwa 1 mm Durchmesser. Die aufgesprühte Menge ist so gering bemessen, daß die auftreffenden Klebertröpfchen auf den Platten nicht verlaufen. Zugleich sind die Düsenöffnungen so weit auseinander geschwenkt/gestellt, daß zwischen den auftreffenden Klebertröpfchen ein Abstand besteht, der größer als der vierfache Tröpfchendurchmesser ist. Der beschriebene Abstand kennzeichnet die Streuung der Tröpfchen. Nach crtindungsgemäßer Verbindung der Ausgangsplatten sind die Klebeflächen so gering und besteht so viel Abstand der Klebeflächen, daß der Wasserdampf dazwischen ausreichend durchdiffundieren kann.

In einem weiteren, nicht dargestellten Ausfilhrungsbeispiel werden Strahlen eines nicht diffusionsoffenen Klebers in einem Abstand zwischen 1 und 100 mm voneinander mit einer Strahldurchmesser zwischen 0,1mm und 5mm auf die Berührungsflächen der Ausgangsplatten aufgetragen. Dadurch entstehen Klebestreifen mit ausreichendem Abstand, so daß wie im zuvor erläuterten Ausfühmngsbeispiel eine ausreichende Diffusion von Wasserdampf gewährleistet ist.

Im ersten beschriebenen Ausführungsbeispiel gelangen die Ausgangsplatten nach dem Kleberauftrag in eine Station 3, in der die Ausgangsplatten auf dem Rollgang aufgerichtet und gegeneinander gedrückt werden. Zugleich findet eine Zentrierung der Ausgangsplatten aufeinander bzw. ein gewünschter Versatz der Ausgangsplatten gegeneinander statt.

In einer Station 4 werden die entstandenen neuen Platten abgelegt bzw. gestapelt.

In einem weiteren nicht dargestellten Ausführungsbeispiel wird ein einziger Strang aus hintereinander liegenden Ausgangsplatten auf einem Rollgang oder einem Transportband erzeugt und mit Kleberauftrag versehen. Die zu verbindenen weiteren Ausgangsplatten werden von Hand oder maschinell von einem Stapel genommen und auf den auf dem Rollgang oder dem Transportband liegenden Ausgangsplatten positioniert.
Für die maschinelle Handhabung der Ausgansplatten eignet sich auch ein Roboter. Der Roboter kann mit einem Greifwerkzeug und/oder einer Vakuumansaugung arbeiten. Die Vakuumansaugung wird auch bei rauher Oberfläche der Ausgangsplatten möglich, wenn die Ansaugköpfe/Flächen sich mit einer breitflächigen und weichen/anschmiegsamen/elastischer Dichtung an die Ausgangsplatten anlegen.

Die erfindungsgemäße Verbindung der Ausgangsplatten kann in einem anderen Ausführungsbeispiel auch ohne Rollgang oder Transportband mittels eines Roboters erfolgen, indem der Roboter zunächst eine nach dem oben beschriebenen bekannten Verfahren bearbeitete Ausgangsplatte von einem Stapel nimmt, vor einer ortsfesten Düse oder über eine ortsfest angeordnete Walze bewegt und anschließend mit der Seite, auf der sich der Kleberauftrag befindet, auf den Stapel zurücklegt bzw. auf die oben liegende Platte im Stapel drückt. Dadurch entsteht eine Verbindung von zwei Ausgangsplatten zu einer neuen Platte. Die neuen Platten können dann von dem Roboter auf einem anderen Stapel abgelegt werden. Vorteilhafterweise kann der Roboter die Ausgangsplatten beim Verbinden so positionieren, daß nach Wunsch entweder neue Platten mit Nut und Feder oder neue Platten mit Stufenfalz entstehen.

Wahlweise können auch zwei Roboter zusammenarbeiten, indem jeder Roboter eine oben beschriebene, bearbeitete Ausgangsplatte von einem Stapel nimmt. Nach Wunsch können beide Roboter für einen Kleberauftrag an ihrer Ausgangsplatte tätig werden. Wahlweise erhält aber auch nur eine der beiden zu verbindenden Ausgangsplatten einen Kleberauftrag. Die Verbindung erfolgt dann dadurch, daß jeder Roboter seine Ausgangsplatte gegen die Ausgangsplatte des anderen Roboters drückt. Danach ist vorgesehen, daß einer der Roboter seine Ausgangsplatte frei gibt und daß der andere Roboter die entstandene neue Platte auf einen Stapel ablegt.

In einem anderen Ausführungsbeispiel wird ein Roboter mit einem Tisch zusammen, indem eine oben beschriebene Ausgangsplatte auf dem Tisch abgelegt und dort aus einer bewegten Düse mit dem Kleber versehen wird und anschließend von dem Stapel eine zweite bearbeitete Ausgangsplatte genommen und auf die bereits mit Kleberauftrag versehene Platte gedrückt wird.

Vorteilhafterweise können die Roboter in weiteren Ausführungsbeispielen eine Oberflächenbearbeitung an einer noch mit Extrusionshaut versehenen Platte oder Schaumstrang selbst vornehmen. Dann wird von den Robotern oder dem vorgesehenen einzelnen Roboter z.B. ein Fräswerkzeug bewegt. Alternativ kann auch eine abgelängte, noch mit Extrusionshaut versehene Platte auch mittels eines Roboters an einem ortsfesten Bearbeitungswerkzeug entlang geführt werden.
Mehrere Roboter können auch in der Weise zusammenarbeiten, daß der eine Roboter die noch mit einer Extrusionshaut versehene Ausgangsplatte hält und der andere Roboter das Bearbeitungswerkzeug führt. In gleicher Weise kann der Kleber aufgebracht werden.

In einer anderen Variante ist nur ein Roboter vorgesehen, der mit einem Tisch oder einem ortsfesten Spannfutter oder einer anderen Halteeinrichtung zusammenarbeitet, indem die noch mit einer Extrusionshaut versehene Ausgangsplatte mit der Halteeinrichtung gehalten wird, während der Roboter mit einem Bearbeitungswerkzeug die Extrusionshaut entfernt, anschließend mit einer Düse oder anderen Werkzeugen den Kleber aufträgt und eine Verbindung mit einer zweiten bearbeiteten Ausgangsplatte herbeiführt.
Wahlweise können dabei statt eines Roboters auch zwei Roboter Anwendung finden.
Als sonstige Werkzeuge können Walzen, Streicheinrichtungen, auch Platten dienen.

Für die einseitige Bearbeitung einer Ausgangsplatte ist es von Vorteil, wenn der Roboter bzw. die Halteeinrichtung zugleich eine Krümmung der einseitig bearbeiteten Platte verhindert. Dafür eignen sich Ansaugplatten und bzw. Halteinrichtungen mit mehreren Ansaugköpfen, welche die Ausgangsplatten am Rand und mittig so belasten, daß Biegekräfte in der Ausgangsplatte auftreten, welche die Spannungen kompensieren, die sonst zu einer Krümmung der Ausgangsplatten führen können.

Die beschriebenen Roboter sind auch von Vorteil, weil sich mit Ihnen Dickentoleranzen vorgefertiger Ausgangsplatten leicht kompensieren lassen. Zum Ausgleich von Dickentoleranzen kann auch der oben beschriebene Tisch in besonderer Weise ausgerüstet werden, z.B. durch eine nachgiebige Anordnung oder eine nachgiebige Ausbildung.

Fig. 2 zeigt zwei Ausgangsplatten 10 und 20 mit einer Berührungsseite 14, einer Oberseite 3 und einer Unterseite 16. Die beiden übereinander liegenden Ausgansplatten 10 und 20 sind durch Verbindungselemente 15 miteinander verbunden. Dabei verlaufen je zwei benachbarte Verbindungselemente 15 unter 45 Grad geneigt zueinander. Bei einer Plattendicke von 50 nun haben die Verbindungselemente 15 eine Länge von 60mm und eine Dicke von 35 mm. Die Verbindungselemente 15 besitzen die Form von langen Streifen in den Abmaßen 60mm x 35 mm x Länge der zu verbindenden Platten.

In weiteren Ausführungsbeispielen beträgt die Dicke der Ausgangsplatten 40 oder 60 mm. die Dicke der Verbindungselemente 20 bis 50 mm und die Länge der Verbindungselemente 40 bis 80 mm, die Länge der Verbindungselemente ist gleich der Plattenlänge.

Die Verbindungselemente 15 sind aus dem gleichen Material wie die Ausgangsplatten 10 und 20 gefertigt, XPS.

Im Ausführungsbeispiel sind die Verbindungselemente aus 35 mm dicken XPS-Platten geschnitten. Zum Ausschneiden ist eine Säge verwendet worden, in anderen Ausführungsbeispielen werden Stanzen oder Fräser verwendet.

Die zu den Verbindungselementen 15 gehörenden Ausnehmungen in den Platten 10 und 20 sind mit einem Scheibenfräser erzeugt worden, der den gleichen Radius wie die Verbindungselemente 15 an deren Auswölbung hat, nämlich 30 mm.
Mit demSeheibenfräser können die Ausnehmungen extrem schnell eingearbeitet werden. Das ist vor allem für eine Bearbeitung von Platten von Vorteil, die auf einem Rollgang kontinuierlich bewegt werden. Dann ist vorgesehen, daß die Fräse sich ein kleines Stück mit den Platten 10 und 20 mitbewegt. Je schneller die Ausnehmungen entsteht, desto geringer ist der notwendige Bewegungsraum dieser Arbeitsvariante.
In einer anderen Arbeitsvariante werden die Platten vereinzelt und für kurze Zeit zur Einarbeitung der Ausnehmungen festgehalten. Je kürzer die Bearbeitungszeit ist, desto besser wird der Arbeitsfluß mit den Platten.

Bei der mechanischen Verbindung der Platten über die gesamte Plattenlänge und -breite werden diek Platten inline kontinuierlich mit einer Nute versehen dadurch, daß die Platten mit Hilfe einer Rollenbahn unter einer Fräse hindurch geführt wird, wobei die Nutzen eingefräst werden.

Im Ausführungsbeispiel entstehen die Platten 10 und 20 dadurch, daß zunächst (über eine gewisse Arbeitsdauer) kontinulierlich zwei XPS-Stränge mittels zweier Extruder erzeugt und nach ausreichender Abkühlung übereinander gefahren werden. Diese XPS-Stränge besitzen zunächst allseitig eine Extrusionshaut. Bevor die Stränge miteinander in Berührung treten werden die XPS-Stränge an der Berührungsfläche 14 durch Fräsen von der Extrusionshaut befreit.
Anschließend kommen die XPS-Stränge aneinander zur Anlage. Dabei verhindert das Stranggewicht ein Schüsseln der XPS-Stränge. Darüber hinaus werden beide Stränge zwischen zwei Fördereinrichtungen, im Ausführungsbeispiel zwei Rollengänge, gehalten. Die oberen Rollen sind dabei verstellbar und/oder nachgiebig angeordnet, um Dickentoleranzen und Formatänderungen Rechnung tragen zu können. Auch der obere Rollengang wirkt dem Schüsselnentgegen.
Im Ausführungsbeispiel erfolgt die Einarbeitung der Ausnehmungen und das anschließende Einfügen der Verbindungselemente unmittelbar nach Aufeinanderliegen der XPS-Stränge. Im Ausführungsbeispiel werden die Verbindungselemente eingeklebt. Dazu ist eine geringe Klebermenge ausreichend, weil sich der Kleber durch den Druck beim Einfügen gut verteilt. Der verwendete Kleber kann ein Heißkleber sein.

Nach der Verbindung der XPS-Stränge werden diese an den Seiten bearbeitet und abgelängt. Dadurch entstehen, die Platten 10 und 20. Die Verbindungselemente sind in der entstehenden Schnittfläche kaum erkennbar, weil sie bündig abschließen und die gleiche Struktur wie die Platten besitzen.

Zur Einarbeitung der Ausnehmungen sind Scheibenfräser vorgesehen, die auf beweglichen Schlitten schwenkbeweglich gehalten werden können. Die Schwenkebene liegt parallel zur Fräsebene. D.h. der Fräser tritt durch Schwenken in Funktion. Dabei beschränkt sich sein Tätigwerden auf ein Eintauchen in den Kunststoffschaum und die anschließende Zurückbewegung. Während dieses Vorganges wird der Fräser auf dem Schlitten mit den Platten 10 und 20 mitbewegt.
Im Ausführungsbeispiel sind auf einem Schlitten jeweils zwei Scheibenfräser vorgesehen, die in obigem Sinne geneigt angeordnet sind. Beide Scheibenfräser werden gleichzeitig in Funktion gebracht, so daß mit jedem Arbeitsgang zwei nebeneinander und geneigt zueinander liegende Ausnehmungen entstehen.
In anderen Ausführungsbeispielen werden noch mehr Fräser oder nur ein Fräser in Tätigkeit gebracht. Die verschiedenen Fräser können über einen gemeinsamen Antrieb gekoppelt sein oder auch nur eine gemeinsame Steuerung besitzen.
Ein einziger Fräser an einer Plattenseite kann die unterschiedlich geneigten Ausnehmungen erzeugen, wenn sein Fräskopf noch eine weitere Schwenkbeweglichkeit besitzt.

Die nach Ablängen der XPS-Stränge entstandenen Platten besitzen an den Schnittflächen keine Verbindungselemente. In einem anderen Ausführungsbeispiel werden in einem zusätzlichen Arbeitsschritt dort weitere Verbindungselemente gesetzt.

## Patentansprüche

1. Verfahren zur Verbindung von mindestens zwei HFCKW-frei extrudierten Polystyrolschaumplatten als Ausgangsplatten zu neuen Platten mit einer Mindestdicke von 70 mm, **dadurch gekennzeichnet, daß**
a) Ausgangsplatten verwendet werden, die an der Berührungsfläche extrusionshautlos sind und
b) eine Verbindung der Ausgangsplatten mit einem diffusionsoffenen Kleber erfolgt und/oder
c) mechanische Verbindungselemente verwendet werden.

2. Verfahren nach Anspruch 1, **dadurch gekennzeichnet, daß** eine Diffusionsoffenheit an der Nahtstelle bzw. Stoßstelle bzw. Berührungsstelle der Ausgangsplatten in der neuen Platte erzeugt wird, welche nicht mehr als 50%, vorzugsweise nicht mehr als 20% und noch weiter bevorzugt gar nicht geringer als die Diffusionsoffenheit einer Ausgangsplatte ist.

3. Verfahren nach Anspruch 1 oder 2, **gekennzeichnet, durch** eine Kombination unterschiedlicher Kleber bei der Verklebungen der Ausgangsplatten.

4. Verfahren nach Anspruch 3, **gekennzeichnet durch** die Anwendung eines Reaktionsklebers und/oder eines Hot-Melt-Klebers zur Erzeugung einer vorläufigen und schnellen Verbindung und die Anwendung von diffusionsoffenem Kleber im übrigen.

5. Verfahren nach einem der Ansprüche 1 bis 4, **gekennzeichnet durch** das Aufsprühen von Kleber oder Aufdruck von Kleber oder Aufstrich von Kleber.

6. Verfahren nach Anspruch 5, **gekennzeichnet durch** die Verwendung von Walzen oder Platten zum Aufdruck des Klebers.

7. Verfahren nach Anspruch 5, **gekennzeichnet durch** die Verwendung von Düsen zur Erzeugung der Klebertröpfchen, wobei die Tröpfchen gestreut werden.

8. Verfahren nach einem der Ansprüche 1 bis 7, **dadurch gekennzeichnet, daß** Ausgangsplatten verwendet werden, die
a) an der Nahtstelle bzw. Stoßstelle bzw. Berührungsfläche plan sind oder
b) durch Wärmebehandlung und/oder
c) durch Druck und/oder Biegung der korrespondierenden anderen Ausgangsplattenfläche angepaßt werden oder
d) in der Form bzw. als ein Bestandteil extrudierter Schaumstoffstränge miteinander verbunden werden, so daß ein neuer Strang entsteht, der zu neuen Platten abgelüngt wird.

9. Verfahren nach einem der Ansprüche 1. bis 8, **gekennzeichnet durch** eine Oberflächenbearbeitung der Ausgangsplatten mittels Fräsen oder Hobeln oder Schneiden oder Sägen.

10. Verfahren nach einem der Ansprüche 1 bis 9, **gekennzeichnet durch** die Herstellung aller gewünschten neuen Platten **durch** Kombination von Ausgangsplatten mit einer Dicke von 30 bis 70 mm, vorzugsweise **durch** Kombination von 40iger Ausgangsplatten und 50iger Ausgangsplatte und 60iger Ausgangsplatten.

11. Verfahren nach einem der Anspruche 1 bis 10, **gekennzeichnet durch** Versetzen der Ausgangsplatten beim Verbinden zur Erzeugung von Nut und Feder bzw. eines Stufenfalzes an den neuen Platten.

12. Verfahren nach einem der Ansprüche 1 bis 11, **gekennzeichnet durch** einen Kleberauftrag der Ausgangsplatten,
a) wobei die Ausgangsplatten in zwei nebeneinanderliegenden Reihen hintereinander auf einem Rollgang oder Band liegen, und **gekennzeichnet durch** anschließendes Ausrichten der Ausgangsplatten und deren Zusammendrücken oder
b) wobei die Ausgangsplatten in einer Reihe hintereinander auf einem Rollgang oder einem Transportband oder auf einem Tisch aufliegen und für jede der Platten eine zweite Platte von einem Stapel genommen und auf die auf die zugehörende liegende Platte gedrückt wird oder
c) wobei eine Ausgangsplatte von einem Stapel genommen und nach dem Kleberauftrag mit klebenden Seite auf den Stapel zurückgelegt und gedrückt wird und die entstehende neue Platte auf einen neuen Stapel gelegt wird oder
d) wobei gleichzeitig zwei Ausgangsplatten von einem Stapel oder von zwei Stapeln genommen und mit einem Kleberauftrag versehen und miteinander verbunden werden.

13. Verfahren nach einem der Ansprüche 1 bis 12, **dadurch gekennzeichnet, daß**
a) Ausgangsplatten verwendet werden, deren Extrusionshaut an beiden gegenüberliegenden Flachseiten entfernt ist oder
b) Ausgangsplatten mit Extrusionshaut verwendet werden, deren Extrusionshaut an einer Flachseite entfernt wird oder
d) Ausgangsplatten in Form von zwei Schaumsträngen verwendet werden, deren Extrusionshaut an einer Flachseite entfernt wird und die anschließend mit einem Kleberauftrag versehen und miteinander verbunden und danach abgelängt werden oder
b) Ausgangsplatten in Form eines Schaumstranges verwendet werden, dessen Extrusionshaut an einer Flachseite entfernt wird und dort anschließend mit einem Kleberauftrag versehen und mit vorbereiteten anderen Platten verbunden wird oder.

14. Verfahren nach einem der Ansprüche 8 bis 13, **dadurch gekennzeichnet, daß** Ausgangsplatten beim Entfernen einer Schaumhaut gehalten und gegen Krümmung geschützt werden.

15. Verfahren nach einem der Ansprüche 1 bis 14, **dadurch gekennzeichnet, daß** abgelängte Ausgangsplatten von einem Stapel genommen werden und/oder neue Platten auf einem Stapel abgelegt werden.

16. Verfahren nach einem der Ansprüche 1 bis 15, **gekennzeichnet durch** die Verwendung eines oder mehrerer Roboters zur Plattenbewegung und/oder **durch** die Verwendung eines Tisches oder eines Spannfutters als Halteeinrichtung für die Ausgangsplatten.

17. Verfahren nach Anspruch 16, **gekennzeichnet durch** Vakuumplatten bzw. Saugnäpfe als Halteeinrichtungen für die Ausgangsplatten.

18. Verfahren nach einem der Ansprüche 1 bis 17, **gekennzeichnet durch** die Verwendung ortsfester Kleberauftragvorrichtungen und/oder ortsfester Oberflächenbearbeitungswerkzeuge bei Einsatz eines Roboters für die Plattenbewegung.

19. Verfahren nach einem der Ansprüche 1 bis 18, **gekennzeichnet durch** eine Werkzeugbewegung mittels Roboter.

20. Verfahren nach einem der Ansprüche 1 bis 19, **gekennzeichnet durch** Verwendung von Verbindungselementen, die zwei oder mehr Kunsttoftschaumplatten mechanisch miteinander verbunden werden.

21. Verfahren nach einem der Ansprüche 1 bis 20, **gekennzeichnet durch** die Verwendung von Verbindungselementen.

22. Verfahren nach Anspruch 20, **dadurch gekennzeichnet, daß** in die Kunststoffschaumplatten bzw. in die Ausgangsplatten Ausnehmungen eingearbeitet werden, in welche die Verbindungselemente eingreifen und/oder daß die Verbindungselemente die Platten umgreifen.

23. Verfahren nach Anspruch 22, **dadurch gekennzeichnet, daß** Ausnehmungen über die gesamte Breite und/oder Länge der Platten eingearbeitet werden..

24. Verfahren nach einem der Ansprüche 20 bis 23, **gekennzeichnet durch** Verwendung von langgestreckten Verbindungselementen mit zu den Kunststoffschaumplatten geneigter Anordnung oder querer Anordnung.

25. Verfahren nach einem der Ansprüche 20 bis 24, **gekennzeichnet durch** Verwendung stabförmiger oder plattenförmiger oder scheibenförmiger Verbindungselemente.

26. Verfahren nach einem der Ansprüch 20 bis 25, **gekennzeichnet durch** Verwendung von Verbindungselementen, die in der Draufsicht einen Kreisabschnitt zeigen.

27. Verfahren nach einem der Ansprüche 20 bis 26, **gekennzeichnet durch** Verwendung von Verbindungselementen, die in der Draufsicht eine Fläche mit unterschiedlicher Randkrümmung und/oder geradem Randverlauf und/oder einen teilweise gekrümmten und teilweise geraden Randverlauf zeigen.

28. Verfahren nach einem der Ansprüche 20 bis 27, **dadurch gekennzeichnet, daß** die Ausnehmungen für die Verbindungselemente in die aufeinanderliegenden Ausgangsplatten oder einzeln in die Ausgangsplatten eingearbeitet werden.

29. Verfahren nach einem der Ansprüche 20 bis 28, **dadurch gekennzeichnet, daß** die Ausnehmungen mit einem Scheibenfräser oder Stirnfräser oder Fingerfräser eingearbeitet werden, wobei die Arbeitsrichtung des Fräsers wie die Verbindungselemente verläuft.

30. Verfahren nach einem der Ansprüche 29, **dadurch gekennzeichnet, daß** ein Scheibenfräser verwendet wird, der einen Radius besitzt, der gleich dem Radius des Kreisabschnittes ist.

31. Verfahren nach einem der Ansprüche 20 bis 30, **dadurch gekennzeichnet, daß** ein Scheibenfräser verwendet wird, dessen Radius höchstens gleich der an dem Verbindungselement vorkommenden maximalen nach außen gerichteten Krümmung ist.

32. Verfahren nach einem der Ansprüche 20 bis 31, **gekennzeichnet durch** die Verwendung von EDV-gesteuerten oder schablonengesteuerten Fräsern.

33. Verfahren nach einem der Ansprüche 20 bis 32, **dadurch gekennzeichnet, daß** eine Klemmung der Verbindungselemente in den Ausnehmungen erzeugt wird.

34. Verfahren nach einem der Ansprüche 20 bis 33, **dadurch gekennzeichnet, daß** der Fingerfräser bei einzeln liegenden Ausgangsplatten von der Berührungsfläche der Ausgangsplatten her in die Platte arbeitet.

35. Verfahren nach einem der Ansprüche 20 bis 34, **gekennzeichnet durch** Einkleben der Verbindungselemente und/oder die Verwendung von Verbindungselementen mit verdickten Enden.

36. Verfahren nach einem der Ansprüche 20 bis 35, **gekennzeichnet durch** die Verwendung von Verbindungselementen aus gleichem Kunststoffschaum, wobei das Raumgewicht der Ausgangsplatten und der Verbindungselemente nicht mehr als 20 kg pro Kubikmeter, vorzugsweise nicht mehr als 5 kg pro Kubikmeter voneinander abweicht.

37. Verfahren nach einem der Ansprüche 20 bis 36, **gekennzeichnet durch** die Einarbeitung von Ausnehmungen in die Plattenseiten, die vor der Oberseite oder Unterseite der liegenden Kunststoffschaumplatte enden.

38. Verfahren nach einem der Ansprüche 20 bis 37. **gekennzeichnet durch** die Einarbeitung von Ausnehmungen, deren Enden einen Abstand von mindestens 10 mm zur Oberseite bzw. Unterseite besitzen.

39. Verfahren nach einem der Ansprüche 20 bis 38, **dadurch gekennzeichnet, daß**
a) XPS-Platten als Ausgangsplatten Anwendung finden
b) Die Plattendicke 40 bis 60 mm beträgt
c) Die Verbindungselemente bei zwei übereinander liegenden Ausgangsplatten eine Dicke von 20 bis 50 mm und/oder eine Länge von 40 bis 80 mm besitzen.

40. Verfahren nach einem der Ansprüche 20 bis 39, **dadurch gekennzeichnet, daß** die Verbindungsselemente durch Ablängen von Profilsträngen oder Ausschneiden aus Platten gewonnen werden.

41. Verfahren nach einem der Ansprüche 20 bis 40, **dadurch gekennzeichnet, daß** maßhaltige Verbindungselemente in die Ausnehmungen eingesetzt werden oder vor dem seitlichen Bearbeiten der Ausgangsplatten die Verbindungselemente eingesetzt werden und die seitliche Bearbeitung der Platten anschließend erfolgt.

42. Verfahren nach einem der Ansprüche 20 bis 41, **gekennzeichnet durch** die Verwendung von Robotern zum Fräsen oder die Verwendung von Frässtationen mit Fräsen, die auf bzw. in Geradführungen und/oder Bogenführung bewegt werden.

43. Verfahren nach Anspruch 42, **gekennzeichnet durch** die Verwendung mehrerer Fräser auf einer gemeinsamen Halterung und/oder mit gemeinsamer Steuerung und/oder mit gemeinsamem Antrieb.

44. Verfahren nach Anspruch 43, **gekennzeichnet durch** die Verwendung eines Fräsers mit einem Schwenkkopf mit zusätzlicher Schwenkbeweglichkeit zur Umstellung auf unterschiedlich geneigte Ausnehmungen.

45. Verfahren nach einem oder mehreren der Ansprüche 20 bis 44, **gekennzeichnet durch** Fräser, die mit den Platten mitbewegt werden, oder **durch** ortsfeste Frässtationen, in denen die Platten ruhen.

46. Verfahren nach einem der Ansprüche 20 bis 45, **gekennzeichnet durch** die Verwendung von Führungen die **durch** Gleitschlitten und/oder Schwenklager gebildet werden.

47. Verfahren nach einem der Ansprüche 1 bis 46, **gekennzeichnet durch** die Verwendung von Ausgangsplatten, die bei liegender Kunststoffschaumplatte an der Oberseite und der Unterseite eine Schäumhaut besitzen und an der Berührungsfläche oberflächenbearbeitet sind.

48. Verfahren nach einem der Ansprüche 1 bis 47, **gekennzeichnet durch** die Verwendung von Schaumplatten aus Polystyrol, Polyethylen, Polypropylen, Ethylen, Propylencopolymere.

## Claims

1. Process for joining at least two HCFC-free (hydrochlorofluorocarbon-free) extruded polystyrene foamed boards, to produce new boards with a minimum thickness of 70 mm, **characterised in that**
a) starting material boards are used that are devoid of extrusion skin on the contact surface and
b) a joining of the starting material boards is carried out with a water vapour permeable adhesive and/or
c) mechanical jointing elements are used.

2. Process according to Claim 1, **characterised in that** a water vapour permeability is produced at the seam or joint or contact area of the starting boards in the new board, which is not more than 50%, preferably not more than 20 % and even more preferably even not less than the water vapour permeability of a starting board.

3. Process according to one of Claims 1 or 2. **characterised by** a combination of different adhesives in the joining of the starting boards.

4. Process according to Claim 3, **characterised by** the use of a reactive adhesive and/or hot melt adhesive to produce a preliminary and rapid joint and the application of a water permeable adhesive for the rest.

5. Process according to one of Claims 1 to 4, **characterised by** spraying adhesive or pressing on adhesive or laying on adhesive.

6. Process according to Claim 5, **characterised by** the use of cylinders or plates to impress the adhesive.

7. Process according to Claim 5, **characterised by** the use of nozzles to produce the adhesive droplets, whereby the droplets are scattered.

8. Process according to one of Claims 1 to 7, **characterised in that** starting boards are used that
a) are flat at the seam or joint or contact area or
b) are mated by heat treatment and/or
c) by pressure and/or bending of the corresponding other surfaces of the starting boards or
d) are joined together in the form of or as a component of extruded foam strands, such that a new strand is produced that is cut to length to new boards.

9. Process according to one of Claims 1 to 8, **characterised by** a surface treatment of the starting boards by routing or planing or cutting or sawing.

10. Process according to one of Claims 1 to 9, **characterised by** the manufacture of all required new boards by combining starting boards with a thickness of 30 to 70 mm, preferably by combining 40 mm starting boards and 50 mm starting boards and 60 mm starting boards.

11. Process according to one of Claims 1 to 9, **characterised by** offsetting the starting boards during the joining, so as to produce a tongue and groove joint or a protruding edge on the new boards.

12. Process according to one of Claims 1 to 11, **characterised by** coating the starting boards with an adhesive,
a) wherein the starting boards lie one behind the other, in two adjacent rows on a roller table or belt, and **characterised by** a subsequent elevation of the starting boards and pressing them together or
b) wherein the starting boards lie behind one another in a row on a roller table or conveyor belt or on a table and for each board a second board is taken from a pile and pressed onto its awaiting partner board or
c) wherein a starting board is taken from a pile and after the application of adhesive, is replaced onto the pile and pressed with its adhering side down and the resulting new board is placed on a new pile or
d) wherein two starting boards are simultaneously taken from a pile, or from two piles, and furnished with a coating of adhesive and joined together.

13. Process according to one of Claims 1 to 12, **characterised in that**
a) starting boards are used whose extrusion skin has been removed from both the opposite flat sides or
b) starting boards with extrusion skin are used, an extrusion skin having been removed from one flat side or
a) starting boards are used in the form of two foamed strands, whose extrusion skin is removed from one flat side and which are subsequently furnished with an adhesive coating and joined together and then cut to length or
b) starting boards are used in the form of a foamed strand, whose extrusion skin is removed from one flat side and onto which is applied an adhesive coating and joined to other prepared boards.

14. Process according to one of Claims 8 to 13, **characterised in that** starting boards are held during the removal of a foam skin and protected against warping.

15. Process according to one of Claims 1 to 14, **characterised in that** trimmed starting boards are taken from a pile and/or new boards are placed on a pile.

16. Process according to one of Claims 1 to 15, **characterised by** the use of one or more robots to move the boards and/or by the use of a table or a die chuck as holding means for the starting boards.

17. Process according to Claim 16, wherein the holding means for the starting boards are vacuum plates or suction cups.

18. Process according to one of Claims 1 to 17, **characterised by** the use of fixed devices for applying the adhesive and/or fixed surface treatment tools by the use of a robot for moving the boards.

19. Process according to one of Claims 1 to 18, **characterised by** tools being moved by means of robots.

20. Process according to one of Claims 1 to 19, **characterised by** the use of joining elements, which additionally join two or more plastic foamed boards to each other mechanically.

21. Process according to one of Claims 1 to 20, **characterised by** the use of joining elements.

22. Process according to Claim 20, **characterised in that** recesses are formed in the plastic foamed boards or in the starting boards, into which engage the joining elements and/or that the joining elements clasp.

23. Process according to Claim 22, **characterised in that** recesses are incorporated over the total width and/or length of the starting boards.

24. Process according to one of Claims 20 to 23, **characterised by** the use of lengthwise joining elements arranged at an angle or transverse to the plastic foamed boards.

25. Process according to one of Claims 20 to 24, **characterised by** the use of rod-shaped or plate-shaped or disk-shaped joining elements.

26. Process according to one of Claims 20 to 25, **characterised by** the use of joining elements, which exhibit a segment of a circle in the top view.

27. Process according to one of Claims 20 to 26, **characterised by** the use of joining elements, which exhibit a surface with different edge curvatures and/or straight edges and/or partly curved and partly straight edges in the top view.

28. Process according to one of Claims 20 to 27, **characterised in that** the recesses for the joining elements are introduced into the starting boards laid one on top of each other or singly into the starting boards.

29. Process according to one of Claims 20 to 28, **characterised in that** the recesses are introduced with a disk milling cutter or face cutter or end milling cutter, wherein the working direction of the cutter takes the same course as the joining elements.

30. Process according to one of Claims 29, **characterised in that** a disk milling cutter is used with the same radius as that of the segment of the circle.

31. Process according to one of Claims 20 to 30, **characterised in that** a disk milling cutter is used with a radius at most equal to that of the maximum outwardly facing curve found on the joining element.

32. Process according to one of Claims 20 to 32, **characterised by** the use of computer-controlled or template-driven cutters.

33. Process according to one of Claims 20 to 33, **characterised in that** a clamping of the joining element in the recesses is produced.

34. Process according to one of Claims 20 to 33, **characterised in that** for individual starting boards, the end milling cutter operates from the contact surface of the starting board into the board.

35. Process according to one of Claims 20 to 34, **characterised by** sticking in the joining elements and/or the use of joining elements with thickened ends.

36. Process according to one of Claims 20 to 35, **characterised by** the use of joining elements made from the same plastic foam, wherein the specific gravity of the starting board and the joining element differs by not more than 20 kg per cubic metre, preferably by not more than 5 kg per cubic metre.

37. Process according to one of Claims 20 to 36, **characterised by** the introduction of recesses into the sides of the boards which end before the upper side or the under side of the horizontal plastic foamed boards.

38. Process according to one of Claims 20 to 37, **characterised by** the introduction of recesses whose ends are at a distance of at least 10 mm from the upper side or the under side.

39. Process according to one of Claims 20 to 38, **characterised in that**
a) extruded polystyrene boards are used as the starting boards
b) the board thickness ranges from 40 to 60 mm
c) the joining elements for two starting boards lying one on top of each other have a thickness of 20 to 50 mm and/or a length of 40 to 80 mm.

40. Process according to one of Claims 20 to 39, **characterised in that** the joining elements are obtained by cutting profile strands to length or by cutting out from boards.

41. Process according to one of Claims 20 to 40, **characterised in that** exactly sized joining elements are introduced into the recesses or introduced prior to the lateral machining of the starting boards and the lateral machining of the boards is subsequently carried out.

42. Process according to one of Claims 20 to 41, **characterised by** the use of robots for cutting or the use of cutting stations with cutters that are moved on or in straight lines and/or are sheet guided.

43. Process according to Claim 42, **characterised by** the use of a plurality of cutters on a common mounting and/or with common control and/or with common actuation.

44. Process according to Claim 43, **characterised by** the use of a cutter with a swivel head with additional revolving mobility for conversion to differently inclined recesses.

45. Process according to one or more of Claims 20 to 44, **characterised by** cutters, which are moved together with the boards, or by fixed cutting stations in which the boards repose.

46. Process according to one of Claims 20 to 45, **characterised by** the use of guide mechanisms that are formed by sliding carriages and/or pivot bearings.

47. Process according to one of Claims 1 to 46, **characterised by** the use of starting boards, which have a foam skin on the upper side and under side of the plastic foamed board and are surface treated on the contact surface.

48. Process according to one of Claims 1 to 47, **characterised by** the use of foamed boards from polystyrene, polyethylene, polypropylene, ethylenepropylene copolymers.

## Revendications

1. Procédé de liaison d'au moins deux panneaux alvéolaires en polystyrène extrudé exempt de HFCKW (hydrocarbures halogénés aliphatiques à haut point d'ébullition) en tant que panneaux de départ, pour de nouveaux panneaux ayant une épaisseur minimale de 70 mm, **caractérisé en ce que** :
a) on utilise des panneaux de départ qui sont sans peau d'extrusion sur la surface de contact, et
b) une liaison des panneaux de départ avec un adhésif ouvert à la diffusion est effectuée et/ou
c) on utilise des éléments de liaison mécaniques.

2. Procédé selon la revendication 1, **caractérisé en ce qu'**est produite une ouverture à la diffusion, au point de liaison, ou au point de jointoiement, ou au point de contact des panneaux de départ dans le nouveau panneau, qui n'est pas supérieure à 50 % de préférence pas supérieure à 20 % et, de manière encore mieux préférée, même pas inférieure à l'ouverture à la diffusion d'un panneau de départ.

3. Procédé selon la revendication 1 ou 2, **caractérisé par** une combinaison de différents adhésifs pour les collages des panneaux de départ.

4. Procédé selon la revendication 3, **caractérisé par** l'application d'un adhésif à réaction et/ou d'un adhésif de type Hot-Melt, pour produire une liaison provisoire et rapide et, au reste, par l'application d'adhésif ouvert à la diffusion.

5. Procédé selon l'une des revendications 1 à 4, **caractérisé par** la pulvérisation d'adhésif ou l'impression d'adhésif ou l'enduction d'adhésif.

6. Procédé selon la revendication 5, **caractérisé par** l'utilisation de rouleaux ou de plaques pour l'impression de l'adhésif.

7. Procédé selon la revendication 5, **caractérisé par** l'utilisation de buses pour la production des gouttelettes d'adhésif, les gouttelettes étant diffusées.

8. Procédé selon l'une des revendications 1 à 7, **caractérisé en ce qu'**on utilise des panneaux de départ, qui
a) sont plans, à l'emplacement de liaison, ou à l'emplacement de jointoiement ou à la surface de contact, ou
b) sont adaptés par traitement thermique et/ou
c) par pressage et/ou flexion de l'autre surface de plaque de départ correspondante, ou
d) sont reliés ensemble dans le moule ou en tant qu'un composant de tronçons de matériau alvéolaire extrudé, de manière à produire un nouveau tronçon, qui est coupé à longueur pour produire de nouvelles plaques.

9. Procédé selon l'une des revendications 1 à 8, **caractérisé par** un traitement de surface des panneaux de départ, par fraisage, ou rabotage, ou découpage, ou sciage.

10. Procédé selon l'une des revendications 1 à 9, **caractérisé par** la fabrication de tous les nouveaux panneaux souhaités; par une combinaison de panneaux de départ d'une épaisseur de 30 à 70 mm, de préférence par combinaison de panneaux de départ de 40 et de panneaux de départ de 50 et de panneaux de départ de 60.

11. Procédé selon l'une des revendications 1 à 10, **caractérisé par** un déplacement des panneaux de départ lors de la liaison, afin de produire une rainure et une languette, ou un puits échelonné sur le nouveau panneau.

12. Procédé selon l'une des revendications 1 à 11, **caractérisé par** une application d'adhésif sur les panneaux de départ,
a) les panneaux de départ étant placés en deux rangées situées l'une à côté de l'autre, l'une derrière l'autre sur une ligne de convoyage ou une bande, et **caractérisés par** le dressage subséquent des panneaux de départ et leur assemblage par pressage, ou
b) les panneaux de départ sont posés en une rangée les uns derrière les autres sur une ligne de convoyage ou une bande de transport, ou sur une table et, pour chacun des panneaux, un deuxième panneau est pris d'une pile et pressé sur le panneau afférent reposant, ou
c) un panneau de départ est pris d'une pile et, après l'application d'adhésif, est ramené avec la face collante sur la pile et pressé, et le nouveau panneau produit est posé sur une nouvelle pile, ou
d) simultanément deux panneaux de départ sont pris d'une pile ou de deux piles et munis d'une application d'adhésif et reliés ensemble.

13. Procédé selon l'une des revendications 1 à 12, **caractérisé en ce que**
a) on utilise des panneaux de départ dont la peau d'extrusion sur les deux faces plates opposées est enlevée, ou
b) on utilise des panneaux de départ avec une peau d'extrusion, dont la peau d'extrusion est enlevée sur une face plate, ou
a) on utilise des panneaux de départ ayant la forme de deux tronçons alvéolaires, dont la peau d'extrusion est enlevée sur une face plate et qui sont munis ensuite d'une application d'adhésif et reliés ensemble, puis coupés à longueur, ou
b) on utilise des panneaux de départ ayant la forme d'un tronçon alvéolaire, dont la peau d'extrusion est enlevée sur une face plate et est munie à cet endroit ensuite d'une application d'adhésif et reliée à d'autres panneaux ayant été préparés.

14. Procédé selon l'une des revendications 8 à 13, **caractérisé en ce que** des panneaux de départ sont maintenus lors de l'enlèvement d'une peau alvéolaire et protégés contre le gauchissement.

15. Procédé selon l'une des revendications 1 à 14, **caractérisé en ce que** des panneaux de départ coupés à longueur sont pris d'une pile et/ou de nouveaux panneaux sont déposés sur une pile.

16. Procédé selon l'une des revendications 1 à 15, **caractérisé par** l'utilisation d'un ou plusieurs robots, pour déplacer les panneaux et/ou **caractérisé par** l'utilisation d'une table ou d'un mandrin de serrage, en tant que dispositif de maintien pour les panneaux de départ.

17. Procédé selon la revendication 16, **caractérisé par** des panneaux à vide ou des ventouses, en tant que dispositifs de maintien pour les panneaux de départ.

18. Procédé selon l'une des revendications 1 à 17, **caractérisé par** l'utilisation de dispositifs applicateurs d'adhésif localement fixes et/ou d'outils de traitement de surface localement fixes, en cas d'utilisation d'un robot pour le déplacement des panneaux.

19. Procédé selon l'une des revendications 1 à 18, **caractérisé par** un déplacement d'outils effectué au moyen de robots.

20. Procédé selon l'une des revendications 1 à 19, **caractérisé par** l'utilisation d'éléments de liaison qui relient ensemble mécaniquement deux panneaux alvéolaires en matière synthétique, ou plus.

21. Procédé selon l'une des revendications 1 à 20, **caractérisé par** l'utilisation d'éléments de liaison.

22. Procédé selon la revendication 20, **caractérisé en ce que**, dans les panneaux alvéolaires en matière synthétique ou dans les panneaux de départ, sont ménagés des évidements, dans lesquels s'engagent les éléments de liaison et/ou **en ce que** les éléments de liaison entourent les panneaux.

23. Procédé selon la revendication 22, **caractérisé en ce que** les évidements sont ménagés sur la totalité de la largeur et/ou de la longueur des panneaux.

24. Procédé selon l'une des revendications 20 à 23, **caractérisé par** l'utilisation d'éléments de liaison allongés, avec un agencement incliné et/ou un agencement transversal par rapport aux panneaux alvéolaires en matière synthétique.

25. Procédé selon l'une des revendications 20 à 24, **caractérisé par** l'utilisation d'éléments de liaison en forme de barres, ou en forme de panneaux, ou en forme de disques.

26. Procédé selon l'une des revendications 20 à 25, **caractérisé par** l'utilisation d'éléments de liaison qui présentent une section circulaire quand on les observe en vue de dessus.

27. Procédé selon l'une des revendications 20 à 26, **caractérisé par** l'utilisation d'éléments de liaison qui, observés en vue de dessus, présentent une surface à courbure en bordure différente et/ou une allure de bordure rectiligne et/ou une allure de bordure partiellement incurvée et partiellement rectiligne.

28. Procédé selon l'une des revendications 20 à 27, **caractérisé en ce que** les évidements prévus pour les éléments de liaison sont ménagés dans les panneaux de départ posés les uns sur les autres, ou ménagés individuellement dans les panneaux de départ.

29. Procédé selon l'une des revendications 20 à 28, **caractérisé en ce que** les évidements sont ménagés avec une fraise-disque, ou une fraise en bout, ou une fraise à queue, la direction de travail de la fraise étant celle de l'allure des éléments de liaison.

30. Procédé selon l'une des revendications 20 à 29, **caractérisé en ce qu'**on utilise une fraise disque ayant un rayon identique au rayon du tronçon circulaire.

31. Procédé selon l'une des revendications 20 à 30, **caractérisé en ce qu'**on utilise une fraise disque, dont le rayon est au plus égal à la courbure, orientée vers l'extérieur, maximale, que l'on a sur l'élément de liaison.

32. Procédé selon l'une des revendications 20 à 31, **caractérisé par** l'utilisation de fraises à commande informatique/électronique, ou de fraises commandées par un gabarit.

33. Procédé selon l'une des revendications 20 à 32, **caractérisé en ce qu'**on produit un serrage des éléments de liaison dans les évidements.

34. Procédé selon l'une des revendications 20 à 33, **caractérisé en ce que** la fraise à queue travaille, pour des panneaux de départ individuels horizontaux, en allant de la face de contact des panneaux de départ et en pénétrant dans le panneau.

35. Procédé selon l'une des revendications 20 à 34, **caractérisé par** un collage des éléments de liaison et/ou par l'utilisation d'éléments de liaison ayant des extrémités épaissies.

36. Procédé selon l'une des revendications 20 à 35, **caractérisé par** l'utilisation d'éléments de liaison formés de la même mousse de matériau synthétique, le poids volumique des panneaux de départ et des éléments de liaison ne différant pas les uns des autres de plus de 20 kg par mètre cube, de préférence pas de plus de 5 kg par mètre cube.

37. Procédé selon l'une des revendications 20 à 36, **caractérisé par** l'usinage d'évidements dans les faces de panneau, qui s'achèvent avant la face supérieure ou la face inférieure du panneau alvéolaire en matière synthétique horizontal.

38. Procédé selon l'une des revendications 20 à 37, **caractérisé par** l'usinage d'évidements, dont les extrémités sont à un espacement d'au moins 10 mm par rapport à la face supérieure à la face inférieure.

39. Procédé selon l'une des revendications 20 à 38, **caractérisé en ce que** :
a) on applique des panneaux XPS en tant que panneaux de départ
b) l'épaisseur de panneau est de 40 à 60 mm
c) les éléments de liaison, lorsqu'on a deux panneaux placés l'un au-dessus de l'autre, ont une épaisseur de 20 à 50 mm et/ou une longueur de 40 à 80 mm.

40. Procédé selon l'une des revendications 20 à 39, **caractérisé en ce que** les éléments de liaison sont obtenus par découpage à longueur de tronçons profilés ou par découpage à partir de plaques.

41. Procédé selon l'une des revendications 20 à 40, **caractérisé en ce que** des éléments de liaison dimensionnellement précis sont insérés dans les évidements et/ou que, avant l'usinage latéral des panneaux de départ, on insère les éléments de liaison et on effectue ensuite l'usinage latéral des panneaux.

42. Procédé selon l'une des revendications 20 à 41, **caractérisé par** l'utilisation de robots pour le fraisage ou par l'utilisation de postes de fraisage équipés de fraises déplacées sur, ou dans, des guidages rectilignes et/ou un guidage arqué.

43. Procédé selon la revendication 42, **caractérisé par** l'utilisation de plusieurs fraises sur une fixation commune et/ou avec une commande commune et/ou avec un entraînement commun.

44. Procédé selon la revendication 43, **caractérisé par** l'utilisation d'une fraise ayant une tête pivotante, avec une mobilité en pivotement supplémentaire pour le changement de réglage pour des évidements d'inclinaison différente.

45. Procédé selon l'une ou plusieurs des revendications 20 à 44, **caractérisé par** des fraises, déplacées conjointement avec les panneaux, ou par des postes de fraisage localement fixes, dans lesquels reposent les panneaux.

46. Procédé selon l'une des revendications 20 à 45, **caractérisé par** l'utilisation de guidages formés par des chariots glissants et/ou un palier de pivotement.

47. Procédé selon l'une des revendications 1 à 46, **caractérisé par** l'utilisation de panneaux de départ qui, lorsque le panneau alvéolaire en matière synthétique est horizontal, ont, sur la face supérieure et la face inférieure, une peau de moussage et qui sont usinés en surface à l'emplacement de la face de contact.

48. Procédé selon l'une des revendications 1 à 47, **caractérisé par** l'utilisation de panneaux alvéolaires, en polystyrène, polyéthylène, polypropylène, éthylène, copolymères de propylène.
